# EUROPEAN PATENT APPLICATION

(11) **EP 4 428 833 A1**
(43) Date of publication of application: **11.09.2024**
(21) Application number: 23161127.8
(22) Date of filing: 10.03.2023
(51) Int. Cl.: G06V 20/10, G06V 20/64, G06V 30/148, G06T 7/11, G06T 7/521, G06T 7/62

(54) **IDENTIFYING USABLE ROOF AREAS FROM A POINT CLOUD**

(71) Applicant: Virtuosolar BV, 2440 Geel (BE)
(72) Inventor: Derdaele, Jens, 9000 Gent (BE); Nascetti, Andrea, 1050 Elsene (BE); Vergauwen, Maarten, 9255 Buggenhout (BE)
(74) Representative: IP HILLS NV

(57) **Abstract**

Example embodiments relate to a computer-implemented method for identifying usable roof areas from a point cloud. The computer-implemented method comprises rasterizing (201) the point cloud to a georeferenced grid (214) of cells (215) comprising elevation values (220), wherein a cell is indicative for a spatial data point (216) characterized by a relative position of the cell within the georeferenced grid and the elevation value of the cell. The computer-implemented method further comprises region growing (202) polygons (231 - 238) of cells indicative for respective roof areas, comprising, for the respective polygons: i) sampling (203) a cell (218) from the georeferenced grid according to a predetermined random sequence; ii) initializing (204) a polygon (219) that includes the sampled cell (218) and the cells adjacent to the sampled cell; iii) initializing (205) a roof plane (217) associated with the polygon by fitting a plane to the spatial data points of the respective cells within the polygon (219); iv) expanding (206) the polygon (219), if the spatial data point of a cell adjacent to the polygon is located at a distance to the roof plane (217) that is smaller than a growing threshold, by adding the adjacent cell to the polygon and updating the roof plane to include the spatial data point of the adjacent cell. The computer-implemented method further comprises identifying (208) the usable roof areas as the one or more polygons (231 - 238) with associated roof planes that meet predetermined conditions.

## Description

### Field of the Invention

The present invention generally relates to identifying usable roof areas from a point cloud.

### Background of the Invention

A roof of a building or construction typically comprises roof surfaces characterized by different tilts, sizes, and shapes. Some roof surfaces may be usable for a certain application or activity while others may be unusable. Usable may, for example, relate to installing solar panels; solar thermal collectors; or heating, ventilation and air conditioning, HVAC, devices. Additionally, some roof surfaces may comprise roof elements or roof superstructures that hinder or impede a desired application or activity on the roof, e.g. a plumbing vent, a dormer, or a chimney.

It may thus be desirable to digitally reconstruct the roof surfaces for the designing and planning of an application or activity on the roof, e.g. from a point cloud of spatial measurements. Such a digital reconstruction is typically based on a planar segmentation procedure, i.e. the grouping of spatial data points that are located on the same plane. Some planar segmentation procedures are based on region growing, wherein roof surfaces are grown from a seed point according to a growth criterium. A problem of region growing is that the k-nearest neighbours of each seed point need to be identified. This is computationally intensive and time-consuming for point clouds that typically comprise a vast amount of spatial data points, as the distance between each spatial data point and the seed point needs to be determined. Additionally, the normals of the spatial data points are typically required to determine planarity or curvature, i.e. to determine whether the neighbouring points and the seed point are located on the same plane. This is a problem as the normals are not available in most spatial data sets or point clouds. It is a further problem to differentiate roof elements from roof surfaces.

### Summary of the Invention

It is an object of the present invention, amongst others, to solve or alleviate the above identified challenges and problems by improving the identification of roof areas from a point cloud.

According to a first aspect, this object is achieved by a computer-implemented method for identifying usable roof areas from a point cloud. The computer-implemented method comprises rasterizing the point cloud to a georeferenced grid of cells comprising elevation values, wherein a cell is indicative for a spatial data point characterized by a relative position of the cell within the georeferenced grid and the elevation value of the cell. The computer-implemented method further comprises region growing polygons of cells indicative for respective roof areas, comprising, for the respective polygons: i) sampling a cell from the georeferenced grid according to a predetermined random sequence; ii) initializing a polygon that includes the sampled cell and the cells adjacent to the sampled cell; iii) initializing a roof plane associated with the polygon by fitting a plane to the spatial data points of the respective cells within the polygon; and iv) expanding the polygon, if the spatial data point of a cell adjacent to the polygon is located at a distance to the roof plane that is smaller than a growing threshold, by adding the adjacent cell to the polygon and updating the roof plane to include the spatial data point of the adjacent cell. The computer-implemented-method further comprises identifying the usable roof areas as the one or more polygons with associated roof planes that meet predetermined conditions.

The point cloud may be a discrete set of data points in space, i.e. a set of spatial data points. Each data point in the point cloud may characterize a physical location in space, e.g. by a set of coordinates according to a coordinate system. Such a point cloud data point may, for example, include x, y, and z coordinates representing longitude, latitude and elevation relative to the surface of the Earth. A point cloud may, for example, be obtained by a 3D scanner, by light detection and ranging, LiDAR, by photogrammetry, or by any combination thereof.

The cells within the georeferenced grid are associated with a geographical area. In other words, the georeferenced grid divides a geographical region into a plurality of cells. The respective cells comprise elevation values that are indicative for the elevation of point cloud data points located within the respective cells. The elevation value of a respective cell may, for example, be an arithmetic mean, a median, a maximum, or a mode of the elevations of respective point cloud data points located within the geographical area associated with the respective cell. Thus, the cells within the georeferenced grid represents a spatial data point characterized by an elevation value and a georeferenced location.

This rasterizing allows improving the memory-efficiency and reducing the required computing resources for identifying usable roof areas, as a plurality of point cloud data points within respective cells of the georeferenced grid are compressed to a single spatial data point. In other words, the point cloud data points located within the geographical area of a cell are represented by a single spatial data point. The georeferenced grid thus provides a memory-efficient data structure. This allows handling substantially high-resolution point clouds efficiently. It is an advantage that the amount of compression, and thus the memory-efficiency and required computing resources, can be controlled by adjusting the resolution of the georeferenced grid, i.e. by adjusting the size of the cells.

Cells within the georeferenced grid are sampled according to a predetermined random sequence. A sampled cell is combined with its adjacent cells within the georeferenced grid, i.e. the neighbouring cells, to form a polygon of cells. The polygon is thus a two-dimensional planar figure within the georeferenced grid. The polygon can be associated with a three-dimensional surface, as each cell within the polygon is indicative for a spatial data point. The roof plane is a three-dimensional plane fitted to these spatial data points, e.g. by means of least squares fitting. The polygon is iteratively expanded, i.e. region-grown, by evaluating the distance between spatial data points of the cells adjacent to the polygon and the roof plane associated with the polygon. If a spatial data point is located sufficiently close to the roof plane, i.e. closer than the growing threshold, the cell associated with that spatial data point is added to the polygon and the roof plane is updated. Updating the roof plane may include fitting a plane to the expanded set of spatial data points associated with the expanded polygon of cells, or updating a parametric equation of the roof plane.

The roof planes associated with the region-grown polygons are then evaluated for meeting the predetermined conditions. If a roof plane meets the predetermined conditions, the associated polygon is identified as a usable roof area, i.e. the polygon is indicative for a usable roof area. The predetermined conditions allow adjusting what constitutes a usable roof area according to a particular application, e.g. for installing solar panels, for installing HVAC components, for installing solar thermal collectors, or for installing a green roof. It is an advantage that usable roof areas may be identified for a variety of applications.

The computer-implemented method allows identifying usable roof areas from a point cloud without normals, thereby reducing the computational cost. This has the advantage that the computer-implemented method can be performed on most point cloud data without substantial pre-processing to determine the normals of the respective point cloud data points. The computer-implemented method further allows reducing the amount of distance calculations to identify nearest neighbours, i.e. adjacent cells, without complex space partitioning of the point cloud data points, e.g. by constructing k-d trees or by voxelization. This has the advantage that usable roof areas are identified faster and more efficiently. Sampling cells according to the predetermined random sequence further allows identifying the edges of roof areas more accurately.

According to an embodiment, the predetermined conditions may comprise at least one of a dimension, a surface area, a shape, a tilt, or an azimuth of the associated roof plane.

According to an embodiment, the computer-implemented method may further comprise identifying unusable roof areas as polygons of cells that are not identified as usable roof areas.

In other words, cells of the georeferenced grid that are not included in the one or more polygons indicative for usable roof areas are identified as unusable roof areas. Polygons indicative for an unusable roof area may thus be region-grown polygons with an associated roof plane that does not meet the predetermined conditions, i.e. that are not identified as indicative for usable roof areas. Alternatively or complementary, cells that are not included in any region-grown polygon, i.e. unassigned cells, may be identified as unusable roof areas. A group of such unassigned cells that neighbour each other may further be combined into a polygon indicative for an unusable roof area. The polygons indicative for unusable roof areas may be indicative for roof elements or roof superstructures that hinder or impede a desired application or activity on the roof.

According to an embodiment, the computer-implemented method may further comprise updating the polygons indicative for unusable roof areas and/or detecting polygons indicative for unusable roof areas by template matching a template polygon to the polygons of cells indicative for roof areas.

The template polygon may be a substantially accurate polygon indicative of the roof area occupied by a roof element or roof superstructure. The template polygon may be obtained by labelling or marking the roof area of the roof element on an orthoimage of the roof. By the template matching, the template polygon is compared to the polygons indicative for useable roof areas and/or the polygons indicative for unusable roof areas. When a sufficiently close match is detected, a polygon may be updated based on the template polygon, e.g. by adjusting the shape and/or outer limit of the polygon based on the template polygon. This allows identifying unusable roof areas more accurately, in particular unusable roof areas that have a limited height difference relative to a usable roof surface.

According to an embodiment, initializing the roof plane may further comprise fitting a plane to the spatial data points of the respective cells within the polygon such that a mean distance between the spatial data points and the plane is smaller than a first fitting threshold, and a maximum distance between the spatial data points and the plane is smaller than a second fitting threshold.

According to an embodiment, region growing polygons of cells may further comprise iteratively expanding a polygon until no more cells adjacent to the polygon have a spatial data point located at a distance to the roof plane that is smaller than the growing threshold.

In other words, for the respective polygons, an initial polygon may be iteratively expanded with neighbouring cells and the associated roof plane may be updated until no more neighbouring cells satisfy the growing threshold.

According to an embodiment, region growing polygons of cells may further comprise sampling cells from the georeferenced grid according to the predetermined random sequence until each cell in the georeferenced grid is evaluated at least once.

According to an embodiment, region growing polygons may further comprise checking the validity of the roof plane.

The validity of a roof plane can be checked following the initializing of the roof plane, following the updating of the roof plane, and/or following the completion of the expanding of a respective polygon. If a roof plane is determined to be invalid, region growing of the respective polygon may be interrupted and a next cell may be sampled according to the predetermined random sequence.

According to an embodiment, the computer-implemented method may further comprise normalizing elevation values with respect to a reference elevation model.

The elevation values that are normalized may be the elevation values within the cells of the georeferenced grid, or the point cloud data points. The normalizing may be performed before or after rasterizing the point cloud. The reference elevation model may be indicative for the elevation of the Earth's surface or terrain at the geographical region represented by the georeferenced grid or the point cloud. The resulting normalized georeferenced grid of cells thus only represents objects with a height above the underlying ground. This allows detecting cells that are part of a building, i.e. a roof, more easily and more reliably.

According to an embodiment, the computer-implemented method may further comprise determining a building footprint based on the normalized elevation values; and wherein region growing polygons of cells is limited to cells located within the building footprint.

The building footprint may be characterized by the outer limit or perimeter of a building on which usable roof areas are to be identified. The roof of the building may thus be represented by a polygon of cells located within the building footprint. Limiting the region growing to the cells within the building footprint allows improving the memory-efficiency and reducing the required computing resources for identifying usable roof areas, as cells located outside the building footprint can be ignored.

According to an embodiment, the computer-implemented method may further comprise smoothing a polygon by approximating an outer limit of the polygon by a minimal amount of straight lines.

The polygon may be a polygon indicative for the building footprint, a polygon indicative for a usable roof area, or a polygon indicative for an unusable roof area. The smoothing may be based on random sample consensus, RANSAC.

According to an embodiment, the computer-implemented method may further comprise generating an output file from the polygons for reconstructing the roof areas by computer aided design.

The output file may be formatted according to a geographic information system file format such as, for example, GeoJSON, Shapefile, Spatialite, or spatial data file. This allows reconstructing the roof areas by providing the output file to computer aided design, CAD, software. This has the advantage that the identified usable and unusable roof areas for an application can be used during the design and planning of the application, e.g. designing a solar panel arrangement.

According to a second aspect, the object is achieved by a data processing system configured to perform the computer-implemented method according to the first aspect.

According to a third aspect, the object is achieved by a computer program comprising instructions which, when the computer program is executed by a computer, cause the computer to perform the computer-implemented method according to the first aspect.

According to a fourth aspect, the object is achieved by a computer-readable medium comprising instructions which, when executed by a computer, cause the computer to perform the computer-implemented method according to the first aspect.

### Brief Description of the Drawings

Fig. 1 shows a perspective view and a top view of an example building with a roof comprising roof areas and roof elements;
Fig. 2 shows steps of a computer-implemented method for identifying usable roof areas from a point cloud, according to an embodiment;
Fig. 3 shows steps according to example embodiments for region growing polygons of cells;
Fig. 4 shows further steps of a computer-implemented method for identifying usable roof areas, according to embodiments; and
Fig. 5 shows an example embodiment of a suitable computing system for performing steps according to example aspects of the invention.

### Detailed Description of Embodiment(s)

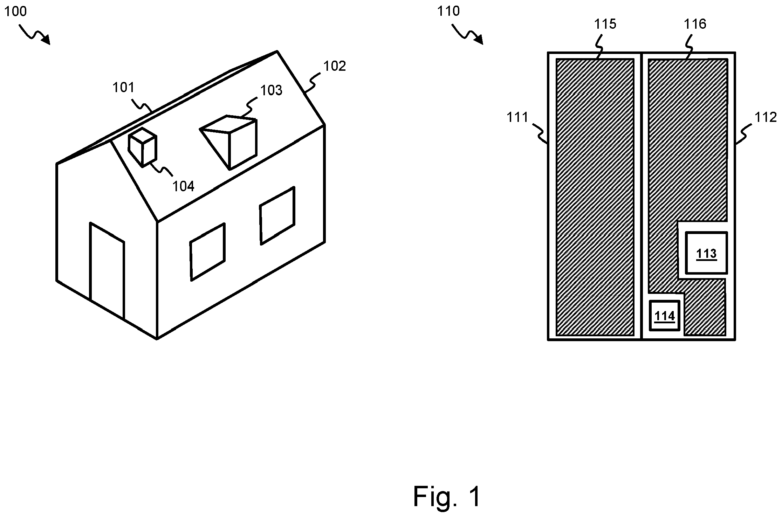

Fig. 1 shows a perspective view 100 of an example building with a roof. The roof comprises a first roof surface 101 and a second roof surface 102. The second roof surface 102 further comprises roof elements 103, 104 or roof superstructures. Roof elements 103, 104 are structures on a roof surface that protrude or are recessed relative to the roof surface, e.g. a chimney 104, a dormer 103, an exhaust of a ventilation system, a solar panel, or an air conditioning unit. These roof elements 103, 104 may hinder, impede, or limit the installation of certain systems or devices on the roof surface, e.g. solar panels, solar thermal collectors, or HVAC devices.

Fig. 1 further shows a top view 110 of the example building, i.e. a top view of the roof of the building. The roof can be divided into distinct roof areas 111, 112, 113, 114 corresponding to the area occupied by the first roof surface 101, the second roof surface 102, the dormer 103, and the chimney 104, respectively. The roof area which is free of obstacles for installing systems or devices may thus be represented by areas 115, 116. However, the usable roof area may further be restricted due to a mismatch between characteristics of the roof areas 115, 116 and the desired application. For example, roof area 115 may be characterised by an azimuth of 0°, i.e. facing north, which is undesirable when installing solar panels; or the portion of roof area 116 around roof elements 113, 114 may be too small to fit solar panels. It may thus be desirable to identify usable roof areas, e.g. when designing or planning a solar panel arrangement or HVAC installation.

Roof surfaces may be digitally reconstructed from spatial data measurements, e.g. a point cloud. Such a point cloud may, for example, be obtained by a light detection and ranging, LiDAR, sensor mounted to a drone that surveys the building. The digital reconstruction of the roof is typically based on a planar segmentation procedure, i.e. grouping spatial data points that are located on the same plane. Most planar segmentation procedures are based on edge-based methods, Hough transform, random sample consensus, RANSAC, or region growing. Edge-based methods allow for fast segmentation but may perform suboptimal on complex roof surfaces. Hough transform is characterized by a high computational cost. RANSAC is stochastic and may detect spurious planes that do not exist in reality.

Region growing planar segmentation implements a growth criterium to merge spatial data points into planes if they are located sufficiently close to each other. Typically, an iteration of a region growing planar segmentation algorithm starts from an initial spatial data point, i.e. a seed point, and iteratively checks whether neighbouring points satisfy the growth criterium, e.g. a maximum distance threshold. Neighbouring points that satisfy the growth criterium are added to the plane, thereby growing the plane. This is repeated for different seed points, thereby reconstructing the roof surfaces.

A problem of region growing is that the k-nearest neighbours of a seed point need to be found or detected to check the growth criterium. This is computationally intensive and time-consuming for point clouds that typically comprise a vast amount of data points, as the distance between each data point and the seed point need to be determined. A space division strategy can be implemented to speed up the k-nearest neighbour search, e.g. by partitioning the point cloud according to a k-dimensional tree or by voxelization of the point cloud. However, the computational cost of these space division strategies remains substantial.

Additionally, region growing for planar segmentation typically requires the normals of the spatial data points to determine planarity or curvature, i.e. to determine whether neighbouring points are located on the same plane. This is a problem as the normals are not available in most spatial data sets or point clouds. As such, the data set or point cloud has to be pre-processed to determine the normals, which is time-consuming and computationally intensive. The reliability and accuracy of region growing for planar segmentation further depends substantially on the growth criterium and the selection of the seed points. It may thus be desirable to improve the planar segmentation procedure to identify usable roof areas from a point cloud.

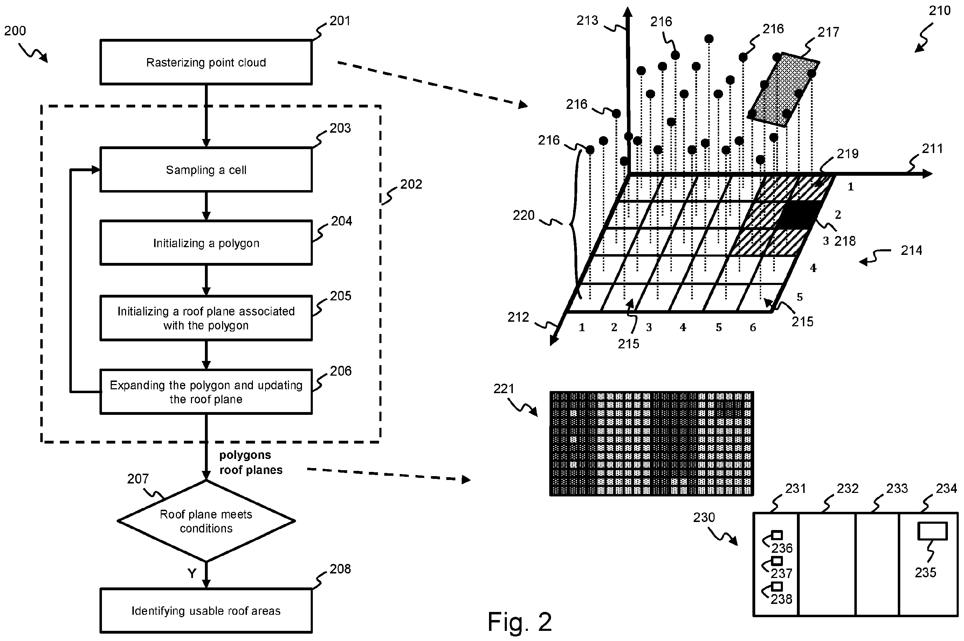

Fig. 2 shows steps 200 according to a computer-implemented method for identifying usable roof areas from a point cloud. The point cloud may be a discrete set of data points in space, i.e. a set of spatial data points. Each data point in the point cloud may characterize a physical location in space, e.g. by a set of coordinates according to a coordinate system. Such a point cloud data point may, for example, include x, y, and z coordinates representing longitude, latitude and elevation relative to the surface of the Earth. A point cloud may, for example, be obtained by a 3D scanner, by light detection and ranging, LiDAR, or by photogrammetry.

In a first step 201, the point cloud is rasterized to a georeferenced grid 214 of cells 215 comprising elevation values 220. The georeferenced grid 214 of cells 215 may also be referred to as a raster of pixels, a matrix of cells, or raster data. The cells 215 within the georeferenced grid 214 are associated with a geographical area. In other words, the georeferenced grid 214 divides a geographical region or surface into a plurality of cells 215 or pixels. The geographical area associated with each cell may have the same width and length, i.e. each cell may represent an equal portion of the region or surface represented by the grid 214. For example, grid 214 may represent a region or surface of 100 square meters, and may comprise 100 cells 215 each having a cell size of 1m × 1m. This cell size may be referred to as the resolution of the georeferenced grid 214. The cell size may determine how coarse or fine patterns or features may be represented by the grid 214.

The relative position of a cell 215 within the georeferenced grid 214 may thus characterize a physical location in a two-dimensional space, e.g. a physical location on Earth's surface. In other words, the georeferenced grid 214 may be represented by a coordinate system defined by a first axis 211 and a second axis 212. The relative position of a cell 215 may be defined by the row and column of the georeferenced grid 214 where the cell is located. For example, cell 218 is located at relative position (6,2). Rasterizing the point cloud in step 201 may include generating the georeferenced grid 214 according to a coordinate system and a predetermined cell size.

The respective cells 215 in the grid 214 comprise elevation values 220. These elevation values 220 are indicative for the elevation of the point cloud data points located within those respective cells, i.e. the point cloud data points located within the geographical area associated with the respective cells 215. An elevation value 220 of a cell 215 may, for example, be an arithmetic mean, a median, a maximum, or a mode of the respective elevations of point cloud data points located within a cell. It will be apparent that a cell 215 may not have an elevation value 220 when no point cloud data points are located within the cell. This may, for example, be represented by assigning a not a number, NaN, value to said cell.

Rasterizing the point cloud in step 201 may thus further include determining, for the respective cells 215 within the grid 214, which point cloud data points are located within the respective cells. This may, for example, be achieved by projecting the point cloud data points onto the georeferenced grid, i.e. onto the plane defined by the first axis 211 and the second axis 212. Rasterizing the point cloud may further include determining the elevation value 220 of the respective cells. This may, for example, be achieved by determining the arithmetic mean of the elevations of the point cloud data points located within the respective cells.

In doing so, a cell 215 within the georeferenced grid 214 is indicative for a spatial data point 216 in three-dimensional space, i.e. in a coordinate system defined by the first axis 211, the second axis 212, and a third axis 213. The spatial data points 216 are characterized by the elevation values 220 of the respective cells 215 and the relative position of the respective cells 215 within the grid 214. The spatial data points 216 are thus a compressed representation of the point cloud, as a plurality of point cloud data points located within a cell are compressed to a single spatial data point 216. The position of the spatial data points 216 according to the first 211 and second 212 axis may be the centre of the respective cells 215, a corner of the respective cells 215, or any other location within the respective cells 215.

This rasterizing 210 allows improving the memory-efficiency and reducing the required computing resources for identifying usable roof areas, as a plurality of point cloud data points within respective cells 215 of the georeferenced grid 214 are compressed to a single spatial data point. In other words, the point cloud data points located within a geographical area of a cell 215 are represented by a single spatial data point 216. The georeferenced grid 214 thus provides a memory-efficient data structure. This allows handling substantially high-resolution point clouds efficiently. It is an advantage that the amount of compression, and thus the memory-efficiency and required computing resources, can be controlled by adjusting the resolution of the georeferenced grid, i.e. by adjusting the size of the cells 215.

A following step 202 comprises region growing polygons 231 - 238 of cells indicative for roof areas. The respective polygons 231 - 238 comprise a selection of cells as illustrated by georeferenced grid 221 in Fig. 2, i.e. the polygons 231 - 238 match the highlighted cells in grid 221. Region growing a respective polygon 231 - 238 starts by sampling a cell within the georeferenced grid 214 according to a predetermined random sequence in step 203. The predetermined random sequence may, for example, be an array comprising the relative position of each cell 215 within the grid 214 in a random order. Sampling a cell in step 203 may thus comprise sampling a next cell in the predetermined random sequence. For example, cell 218 at relative position (2,6) may be the next cell in the sequence.

In a next step 204, a sampled cell is combined with its adjacent or neighbouring cells to form or construct a polygon of cells, i.e. an initial polygon or candidate polygon. For example, sampled cell 218 may be combined with its five adjacent cells to form an initial polygon 219. Polygon 219 is thus a two-dimensional planar figure characterized by cells (5,1), (6,1), (5,2), (6,2), (5,3), (6,3) within the georeferenced grid 214. The two-dimensional polygon 219 can be associated with a three-dimensional surface 217, as each cell within the polygon 219 is indicative for a spatial data point 216.

In a following step 205, a roof plane 217 associated with the polygon 219 is initialized by fitting a three-dimensional plane to the set of spatial data points 216 of the cells within the polygon 219. This may, for example, be achieved by least square fitting. The roof plane 217 may further be fitted to the spatial data points 216 of the respective cells 218, 219 within the polygon such that a mean distance between the spatial data points 216 and the plane 217 is smaller than a first fitting threshold, and a maximum distance between the spatial data points 216 and the plane 217 is smaller than a second fitting threshold. This distance may, for example, be a Euclidean distance.

In a next step 206, the initial polygon 219 and the associated roof plane 217 are expanded with adjacent cells and their spatial data points, respectively, if the spatial data point of an adjacent cell is located at a distance to the roof plane 217 that is smaller than a growing threshold. Expanding the polygon 219 includes adding the adjacent cell to the polygon 219. Expanding the roof plane 217 includes updating the roof plane such that the spatial data point of the adjacent cell is included in the updated roof plane. This can be achieved by fitting a plane to the expanded set of spatial data points, or by updating the parametric equation of the roof plane 217.

For example, the cells adjacent to polygon 219 include cells at relative position (4,1), (4,2), (4,3), (4,4), (5,4), and (6,4). Step 206 may then comprise determining the respective distances between the roof plane 217 and the spatial data points associated with these adjacent cells. The adjacent cells with a spatial data point closer than the growing threshold are added to polygon 219, thereby expanding polygon 219. The roof plane 217 associated with polygon 219 is then updated to include the spatial data points of the added cells.

Region growing a respective polygon may further comprise iteratively expanding the polygon, i.e. repeating step 206, until no more cells adjacent to the polygon have a spatial data point located at a distance to the roof plane that is smaller than the growing threshold. In other words, for the respective polygons, an initial polygon 219 may be iteratively expanded with neighbouring cells and the associated roof plane may be updated until no more neighbouring cells satisfy the growing threshold. When no more adjacent cells satisfy the growing threshold, the computer-implemented method may jump to a next iteration of the region-growing 202 by sampling a next cell from the predetermined random sequence in step 203.

This may iteratively be repeated during the region growing 202 until each cell in the georeferenced grid 214 is sampled at least once. In other words, the region growing may be completed when each cell within the georeferenced grid has been sampled in step 203. Alternatively, the region growing may be completed when each cell within the georeferenced grid has been evaluated at least once, i.e. visited at least once. A cell may be considered evaluated or visited if it has been sampled in step 203, if it has been combined with the sampled cell as an adjacent cell in step 204, or if it has been an adjacent cell considered for expanding a polygon in step 206.

The computer-implemented method may thus output a set of polygons comprising, for the respective polygons, an identifier, an equation characterizing the polygon in two-dimensional space, and an equation characterizing the associated roof plane in three-dimensional space.

In a next step 207, it is evaluated whether the roof planes associated with the region-grown polygons 231 - 238 meet a set of predetermined conditions. The set of predetermined conditions may comprise at least one of a dimension, a surface area, a shape, a tilt, or an azimuth of the associated roof plane. If a roof plane meets the predetermined conditions, the associated polygon 230 - 238 is identified as a usable roof area in step 208, i.e. the associated polygon 230 - 238 is indicative for a usable roof area. The predetermined conditions allow adjusting what constitutes a usable roof area according to a particular application, e.g. for installing solar panels, for installing HVAC components, for installing solar thermal collectors, or for installing a green roof. It is an advantage that usable roof areas may be identified for a variety of applications.

The computer-implemented method allows identifying usable roof areas from a point cloud without normals, thereby reducing the computational cost. This has the advantage that the computer-implemented method can be performed on most point cloud data without substantial pre-processing to determine the normals of the respective point cloud data points. This has the further advantage that the method can be independent of auxiliary data, e.g. building plan maps, digital elevation models, DEMs, and orthoimages. The computer-implemented method further allows reducing the amount of distance calculations to identify nearest neighbours without complex space partitioning of the point cloud data points, e.g. by constructing k-d trees or voxelization, as the georeferenced grid 214 avoids searching the entire point cloud when searching for neighbouring points. This has the advantage that usable roof areas are identified faster and more efficiently. Sampling cells according to the predetermined random sequence further allows identifying the edges of roof areas more accurately.

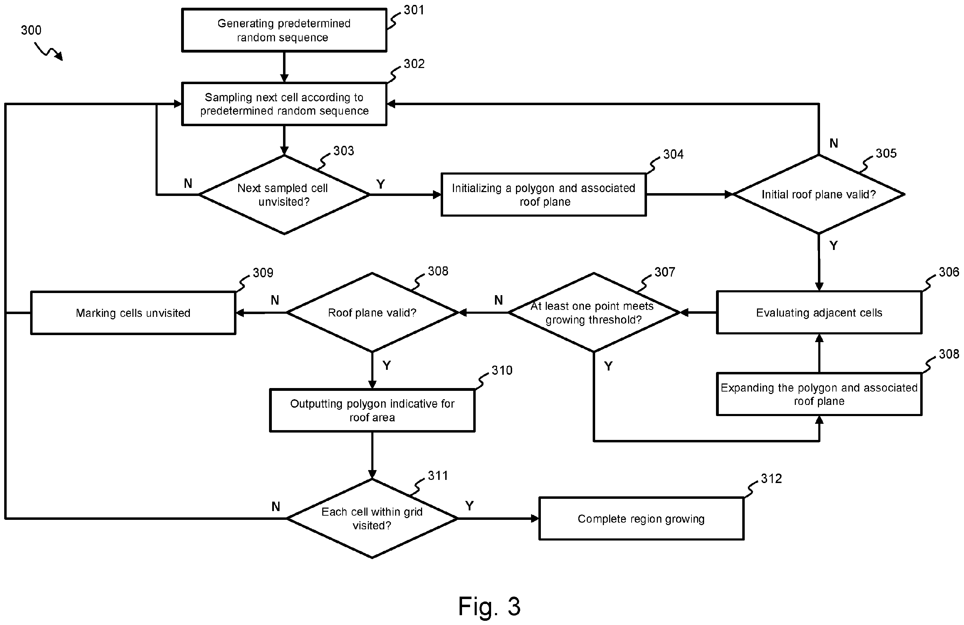

Fig. 3 shows steps 300 according to example embodiments for region growing polygons of cells, i.e. step 202 in Fig. 2. In a first step 301, the predetermined random sequence may be generated. In a following step 302, an iteration of region growing may start by sampling a next cell according to the predetermined random sequence. In a next step 303, it is checked whether the next cell is unvisited, i.e. whether the next cell has been evaluated or visited in a previous iteration of region growing. If the next cell has been visited, the iteration may terminate and start a successive iteration by sampling a next cell according to the random sequence, i.e. return to step 302. If the next cell is unvisited in step 303, the iteration may proceed to step 304 by initializing a polygon and by initializing an associated roof plane, as described above in relation to Fig. 2.

Next, in step 305, the validity of the roof plane may be checked. Checking the validity of a roof plane may include checking the roof plane for holes or missing portions; checking the amount of spatial data points within the roof plane; and/or checking the density of the roof plane. For example, the validity of a roof plane can be determined by checking the amount of spatial data points in relation to their density, and the average error of candidate points to the best-fit plane. If the initial roof plane is valid, the region growing may continue to step 306. In this next step 306, the cells adjacent to the initial polygon may be evaluated or visited by determining the distance between their spatial data points and the initial roof plane. If at least one spatial data point meets the growing threshold, i.e. has a distance to the roof plane smaller than the growing threshold, the region growing continues to step 308. In step 308, the polygon is expanded by adding to the polygon the adjacent cells with spatial data points that meet the growing threshold. The roof plane is also updated to include the spatial data points of those adjacent cells in step 308. Steps 306, 307, and 308 may be iteratively repeated until no more cells adjacent to the polygon have a spatial data point that satisfies the growing threshold. If this is the case, the region growing may proceed to step 308 to check whether the region-grown roof plane is valid.

A valid roof plane is outputted in step 310, e.g. by storing the polygon and the associated roof plane in a data structure. If the region-grown roof plane is determined to be invalid in step 308, all visited cells during this iteration of the region growing may be marked unvisited in step 309. In doing so, these cells can be visited again during a next iteration of region growing.

As long as cells within the georeferenced grid remain unvisited in step 311, a next iteration of region growing is initiated by sampling a next cell according to the random sequence in step 302. In other words, steps 302 - 310 are iteratively repeated until each cell in the georeferenced grid is visited at least once. Visiting each cell at least once completes the region growing in step 312.

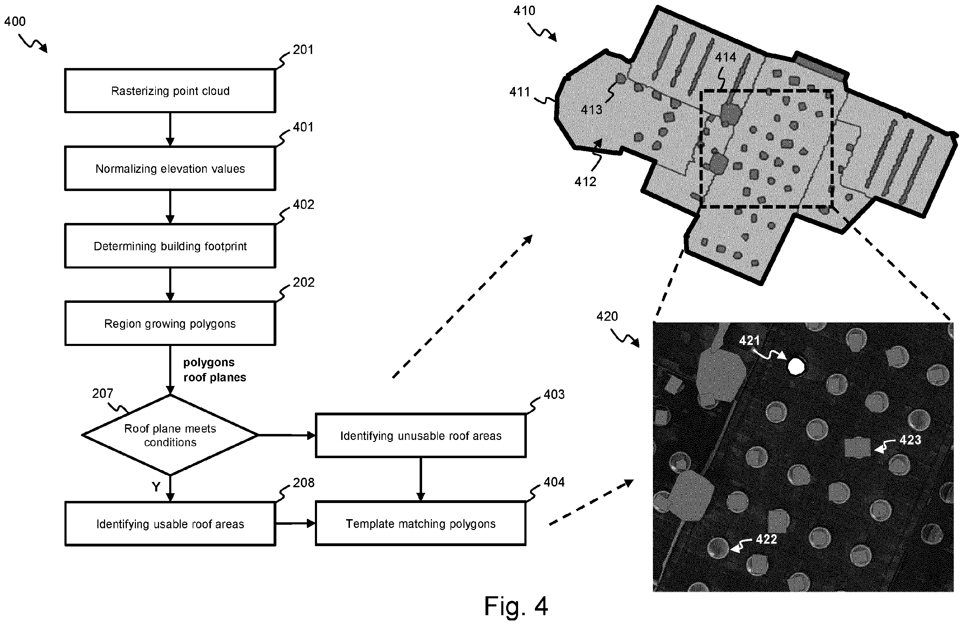

Fig. 4 shows steps 400 of a computer-implemented method for identifying usable roof areas according to embodiments. The method may comprise normalizing elevation values with respect to a reference elevation model in step 401. The elevation values being normalized may be the elevation values within the cells of the georeferenced grid, or the elevation of the point cloud data points. The normalizing may be performed before or after rasterizing the point cloud in step 201. The reference elevation model may be indicative for the elevation of the Earth's surface or terrain at the geographical region represented by the georeferenced grid or underlying the point cloud, e.g. a digital terrain model, DTM. The resulting normalized georeferenced grid of cells thus only represents data points with a height above the underlying ground or terrain. This allows detecting cells that are part of a building, i.e. a roof, more easily and more easily and more reliably.

In a following step 402, a building footprint 411 may be determined based on the normalized elevation values. The building footprint 411 may be characterized by the outer limit or perimeter of a building on which usable roof areas are to be identified. The roof of the building may thus be represented by a polygon of cells located within the building footprint 411. By limiting the region growing of polygons in step 202 to the cells located within the building footprint, the memory-efficiency of the region growing is improved. This further allows reducing the required computing resources for identifying usable roof areas as cells, and thus point cloud data, located outside the building footprint can be ignored during the region growing. Determining the building footprint can thus improve and accelerate the procedure of roof segmentation and alleviate inherent uncertainties. Determining the building footprint may further be performed before rasterizing the point cloud in step 201.

The resulting region-grown polygons and associated roof planes may then be identified as indicative for usable roof areas in step 208 if the associated roof planes meet the predetermined conditions in step 207. The computer-implemented method may further comprise, identifying polygons indicative for unusable roof areas in step 403. The polygons indicative for unusable roof areas may be the region-grown polygons that are not identified as indicative for usable roof areas, i.e. polygons that do not meet the predetermined conditions in step 207. Alternatively or complementary, cells that are not included in any region-grown polygon, i.e. unassigned cells, may be identified as unusable roof areas. A group of such unassigned cells that neighbour each other may further be combined into a polygon indicative for an unusable roof area. The polygons indicative for unusable roof areas may be indicative for roof elements or roof superstructures that hinder or impede a desired application or activity on the roof such as, for example, installing solar panels. Fig. 4 further illustrates the resulting polygons indicative for usable roof areas 412 and unusable roof areas 413 within the building footprint 411.

In a following step 404, template matching may be performed on the polygons 412, 413. To this end, a template polygon 421 is obtained. The template polygon 421 may be a substantially accurate polygon indicative of the roof area occupied by a roof element or roof superstructure. The template polygon 421 may be obtained by labelling the roof area of the roof element or superstructure on an orthoimage of the roof. An orthoimage or orthophoto is an aerial image that is corrected for lens distortion, camera tilt, perspective, and topographic relief, i.e. an aerial image that is orthorectified.

Fig. 4 further illustrates an orthoimage 420 of a portion of roof 410 with an overlay of the identified polygons indicative for unusable roof areas 413. The orthoimage 420 shows a repetitive pattern of roof elements 422 on the roof, e.g. circular skylights. Labelling or marking a polygon of cells that closely matches the shape of the roof element therefore allows obtaining a template polygon 421 for roof elements 422. It will be apparent that a georeferenced grid with a smaller cell size, i.e. higher resolution, allows matching the shape of roof elements more closely. By template matching the template polygon 421 to the polygons indicative for unusable roof areas 413, the polygons can be updated to represent the roof area occupied by the roof element more closely. For example, polygon 423 may be updated as the template matching indicates that polygon 423 represents a circular skylight 422. This allows identifying unusable roof areas more accurately, in particular unusable roof areas that have a limited height difference relative to a usable roof surface.

The computer-implemented method may further comprise smoothing any of the polygons, i.e. a polygon indicative for the building footprint 411, a polygon indicative for a usable roof area 412, or a polygon indicative for an unusable roof area 413. This can be achieved by approximating an outer limit of the polygon by a minimal amount of straight lines. The smoothing may be based on random sample consensus, RANSAC.

The computer-implemented method may further comprise generating an output file from the polygons 412, 413 for reconstructing the roof areas by computer aided design, CAD. In other words, the roof planes associated with the polygons 412, 413 may be reconstructed by CAD software based on the output file. The output file may be formatted according to a geographic information system file format such as, for example, GeoJSON, Shapefile, Spatialite, or spatial data file. This allows reconstructing the roof areas by providing the output file to CAD software. This has the advantage that the identified usable and unusable roof areas for an application can be used during the design and planning of the application, e.g. designing a solar panel arrangement.

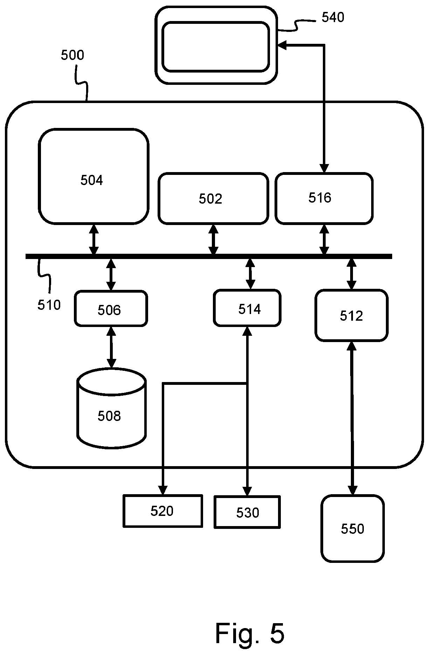

Fig. 5 shows a suitable computing system 500 enabling to implement embodiments of the above described method according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems 550. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for identifying usable roof areas from a point cloud; the computer-implemented method comprising:
- rasterizing (201) the point cloud to a georeferenced grid (214) of cells (215) comprising elevation values (220), wherein a cell is indicative for a spatial data point (216) **characterized by** a relative position of the cell within the georeferenced grid and the elevation value of the cell;
- region growing (202) polygons (231 - 238) of cells indicative for respective roof areas, comprising, for the respective polygons:
- sampling (203) a cell (218) from the georeferenced grid according to a predetermined random sequence;
- initializing (204) a polygon (219) that includes the sampled cell (218) and the cells adjacent to the sampled cell;
- initializing (205) a roof plane (217) associated with the polygon by fitting a plane to the spatial data points of the respective cells within the polygon (219);
- expanding (206) the polygon (219), if the spatial data point of a cell adjacent to the polygon is located at a distance to the roof plane (217) that is smaller than a growing threshold, by adding the adjacent cell to the polygon and updating the roof plane to include the spatial data point of the adjacent cell;
- identifying (208) the usable roof areas as the one or more polygons (231 - 238) with associated roof planes that meet predetermined conditions.

2. The computer-implemented method according to claim 1, wherein the predetermined conditions comprise at least one of a dimension, a surface area, a shape, a tilt, or an azimuth of the associated roof plane.

3. The computer-implemented method according to any of the preceding claims, further comprising identifying (304) unusable roof areas as polygons of cells that are not identified as usable roof areas.

4. The computer-implemented method according to claim 3, further comprising updating the polygons indicative for unusable roof areas and/or detecting polygons indicative for unusable roof areas by template matching (305) a template polygon to the polygons of cells indicative for roof areas.

5. The computer-implemented method according to any of the preceding claims, wherein initializing the roof plane further comprises fitting a plane to the spatial data points of the respective cells within the polygon such that a mean distance between the spatial data points and the plane is smaller than a first fitting threshold, and a maximum distance between the spatial data points and the plane is smaller than a second fitting threshold.

6. The computer-implemented method according to any of the preceding claims, wherein region growing (203) polygons of cells further comprises iteratively expanding a polygon until no more cells adjacent to the polygon have a spatial data point located at a distance to the roof plane that is smaller than the growing threshold.

7. The computer-implemented method according to any of the preceding claims, wherein region growing (203) polygons of cells further comprises sampling cells from the georeferenced grid according to the predetermined random sequence until each cell in the georeferenced grid is evaluated at least once.

8. The computer-implemented method according to any of the preceding claims, wherein region growing polygons further comprises checking the validity of the roof plane.

9. The computer-implemented method according to any of the preceding claims, further comprising normalizing (303) elevation values with respect to a reference elevation model (310).

10. The computer-implemented method according to claim 10, further comprising determining a building footprint (211) based on the normalized elevation values; and wherein region growing polygons of cells is limited to cells located within the building footprint.

11. The computer implemented method according to any of the preceding claims, further comprising smoothing (301) a polygon by approximating an outer limit of the polygon by a minimal amount of straight lines.

12. The computer implemented method according to any of the preceding claims, further comprising generating an output file from the polygons for reconstructing the respective roof areas for computer aided design that includes the vector data.

13. A data processing system configured to perform the computer implemented method according to any one of claims 1 to 12.

14. A computer program comprising instructions which, when the computer program is executed by a computer, cause the computer to perform the computer implemented method according to any one of claims 1 to 12.

15. A computer-readable medium comprising instructions which, when executed by a computer, cause the computer to perform the computer implemented method according to any of claims 1 to 12.
